**Europäisches Patentamt**

**European Patent Office**

**Office européen des brevets**

(19)

(11) **EP 1 127 910 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(51) Int Cl.⁷: **C08J 3/12**, C08B 11/20

(21) Anmeldenummer: **01103517.7**

(22) Anmeldetag: **16.02.2001**

(54) **Verfahren zur Herstellung pulverförmiger wasserlöslicher Cellulosederivate unter Einsatz eines Wasserdampf/Inertgas-Gemisches oder Wasserdampf/Luftgemisches als Transport und Wärmeträgergas**

Process for the preparation of powdered water-soluble cellulose derivatives by using a steam/inertgas or steam/air mixture as a heat transport medium

Procédé de préparation de dérivés cellulosiques solubles dans l'eau et sous forme de poudre, à partir d'un mélange de vapeur d'eau/gaz inerte ou d'un mélange de vapeur d'eau/air, comme gaz vehiculant et gaz transportant la chaleur

(84) Benannte Vertragsstaaten:
**AT BE CH CY DE DK ES FI FR GB GR IE IT LI LU MC NL PT SE TR**

(30) Priorität: **28.02.2000 DE 10009411**

(43) Veröffentlichungstag der Anmeldung:
**29.08.2001 Patentblatt 2001/35**

(73) Patentinhaber: **Wolff Walsrode AG**
**29655 Walsrode (DE)**

(72) Erfinder:
• **Schlesiger, Hartwig, Dr.**
**29683 Fallingbostel (DE)**
• **Morning, Martin, Dr.**
**29699 Bomlitz (DE)**

• **Weber, Gunter, Dr.**
**29683 Fallingbostel (DE)**
• **Eckhardt, Volker, Dr.**
**29664 Walsrode (DE)**
• **Sonnenberg, Gerd**
**29664 Walsrode (DE)**
• **Kiesewetter, René, Dr.**
**29683 Fallingbostel (DE)**

(74) Vertreter: **Lütjens, Henning**
**Bayer MaterialScience AG**
**Law and Patents**
**Patents and Licensing**
**Geb. Q 18**
**51368 Leverkusen (DE)**

(56) Entgegenhaltungen:
**WO-A-98/31710**

EP 1 127 910 B1

**Beschreibung**

Die Erfindung betrifft ein neues, besonders wirtschaftliches Verfahren zur Herstellung von pulverförmigen wasserlöslichen Cellulosederivaten, bevorzugt solchen mit thermischem Flockpunkt.

Nach der Reaktion und gegebenenfalls nach der Reinigung von bei der Reaktion entstandenen Nebenprodukten liegen Cellulosederivate insbesondere Celluloseether in bröckeliger, stückiger oder wattiger Form vor. In dieser Form beinhalten die Cellulosederivate noch die durch die Rohmaterialien vorgegebenen Strukturen. So zeigen Celluloseether meist noch die faserartige Struktur der Ausgangscellulose. Diese Cellulosederivate sind so für ihren Einsatz, z.B. als in organischen und/oder wässrigen Medien lösliche Produkte, nicht geeignet.

Auch ist es notwendig, für die unterschiedlichen Einsatzgebiete bestimmte Korngrößenverteilungen, Schüttdichten, Trocknungsgrade und Viskositätsgrade einzustellen.

Grundsätzlich müssen also nahezu alle Cellulosederivate verdichtet, gemahlen und getrocknet werden, um sie einsatzfähig zu machen.

Zu den technisch bedeutenden Cellulosederivaten gehören insbesondere die Celluloseether. Ihre Herstellung, Eigenschaften und Anwendungen werden z.B. beschrieben in:

- Ullmann's Encyclopedia of Industrial Chemistry, 5th Edition (1986), Volume A5, Page 461- 488, VCH Verlagsgesellschaft, Weinheim.
- Methoden der organischen Chemie, 4. Auflage (1987), Band E20, Makromolekulare Stoffe, Teilband 3, Seite 2048-2076, Georg Thieme Verlag Stuttgart.

In der EP-A 0 049 815 wird ein zweistufiges Verfahren zur Herstellung von Mikropulvern aus Celluloseethern oder Cellulose beschrieben, wobei man die Produkte, die eine feinfaserige oder wollige Struktur aufweisen, zuerst in eine versprödete, verfestigte Form überführt und das so behandelte Material einer Mahlung unterwirft bis eine Korngrößenverteilung von mindestens 90 % unter 0,125 mm erreicht wird. In der Versprödungsstufe werden Schwing- oder Kugelmühlen, vorzugsweise in gekühlter Ausführung oder Pelletpressen und in der Mahlstufe Strahl, Stift- oder Pralltellermühlen eingesetzt.

EP-A-0 370 447 beschreibt ein Verfahren zur produktschonenden Mahlung und gleichzeitigen Trocknung von feuchten Celluloseethern, wobei ein Celluloseether mit einer Anfangsfeuchte von 20 bis 70 Gew.-% mittels eines Transportgases befördert und gleichzeitig zu einer Schlagzerkleinerung reibzerkleinert und durch die Mahlenergie auf eine Restfeuchte von 1 bis 10 Gew.-% getrocknet wird.

In der EP-A-0 384 046 wird ein Verfahren zur Herstellung von Celluloseetherteilchen beschrieben, umfassend das Zerkleinern in einer Hochdrehzahl-Luftstrom-Rotationsprallmühle auf eine Teilchengröße von 0,4 bis 0,035 mm von Celluloseethern mit einer Viskosität größer 100 Pa*s, bestimmt als 2%-ige wässrige Lösung bei 20°C unter Verwendung eines Ubbelodhe Rohres.

Die EP-A-0 835 881 beschreibt ein Verfahren zur Herstellung von Methylcellulose-Pulvern mit spezieller Sieblinie durch Einstellung eines Methylhydroxyalkylcellulosegranulates auf einen Feuchtigkeitsgehalt von 30 bis 70 Gew.-% mit Wasser und anschließende Mahlung in einer Rotationsmühle wobei durch die eingetragene Mahlenergie gleichzeitig getrocknet wird. Es wird durch Klassierung eine spezielle Sieblinie eingestellt.

Die bekannten Verfahren nach dem Stand der Technik sind zum großen Teil mehrstufig mit Vortrockner oder Vorversprödung bzw. -verdichtung. Weiterhin ist bei allen Verfahren die chemische und/oder thermische Belastung der Makromoleküle, besonders bei der Verarbeitung von hochviskosen, hochsubstituierten Produkten, immer noch so hoch, dass bei der Mahlung die Makromoleküle im Sinne einer Kettenverkleinerung abgebaut werden, was sich insbesondere durch den mehr oder minder hohen Viskositätsabbau gegenüber den eingesetzten Produkten bemerkbar macht. Außerdem verhornen die Oberflächen der durch Vorversprödung- bzw. Vortrocknungsschritte behandelten Produkte. Des weiteren ist allen Verfahren der hohe Energieaufwand zur Vermahlung der Cellulosederivate nach Vortrocknung, -versprödung oder -verdichtung gemeinsam.

Es sind bereits Verfahren bekannt, die einige der oben zitierten Nachteile vermeiden, so beschreibt z.B. die GB-A-2 262 527 ein Verfahren zur Zerkleinerung von Cellulosederivaten durch Gelierung eines Celluloseethers mit einem Wassergehalt von 30 bis 80 Gew.-% durch Kühlung auf eine Temperatur von -10 bis 60°C und anschließende Mahltrocknung des Gels (bevorzugt in einer Prallmühle). Bei diesem Verfahren wird jedoch Luft oder Stickstoff zur Trocknung und Förderung genutzt, welcher anschließend nicht recycliert wird. Der Energieaufwand zur Durchführung des Verfahrens ist daher deutlich höher, als theoretisch zur Verdampfung des Wasser, welches sich in dem Mahlgut befindet, notwendig ist. Auch gibt die GB-A-2 262 527 keine Anweisung, wie mit hydroxyethylierten Mischethern der Methylcellulose (wie z.B. Methylhydroxyethylcellulose oder Methylhydroxypropyhydroxyethylcellulose) zu verfahren ist, um ein Produkt mit einem Schüttgewicht größer 300 g/l zu erhalten. Auch ist das Ergebnis der Mahltrocknung von Methylcellulose (Beispiel 3) mit einem Schüttgewicht von 270 g/l nicht zufriedenstellend.

Die WO 98/31710 beschreibt ein Verfahren zur Herstellung von feinteiligen Polysaccharidderivaten durch Vergelung bzw. Lösung eines Celluloseethers mit 35 bis 99 Gew.-% (bevorzugt 60 bis 80 Gew.-%) Wasser bezogen auf das Gesamtgewicht und anschließende Mahltrocknung, wobei zum Transport und zur Trocknung des Mahlgutes überhitzter Wasserdampf eingesetzt wird. Dieses Verfahren vermeidet ebenfalls viele der oben zitierten Nachteile. Jedoch ist die Zerkleinerung bei diesem Mahltrocknungsverfahren noch nicht ausreichend, so passieren nur 57 Gew.-% der zerkleinerten Methylhydroxyethylcellulose ein 0,063 mm Sieb (Beispiel 3). Erst durch eine Klassierung über ein Luftstrahlsieb wird die gewünschte Feinheit erreicht. Des weiteren bringt der Einsatz von reinem Wasserdampf als Transport- und Wärmeträgergas Nachteile bezüglich der Betriebssicherheit der Mahlanlage mit sich, da sich rasch durch Kondensation von Wasser zusammen mit dem feinteiligen Polysaccharidderivat Filme und Verkrustungen bilden. Hierdurch wird der Aufwand für Instandhaltungsmaßnahmen erhöht. Feinteilige Produkte, die zu mehr als 95 Gew.-% ein 0,1 mm Sieb passieren oder gar zu mehr als 90 Gew.-% ein 0,063 mm Sieb passieren, werden gemäß dieser Anmeldung nur durch Dispergieren von gelösten Polysaccharidderivaten in einem nichtlösendem Umgebungsmedium und nachfolgende Zerkleinerungs- Filtrations- und Trocknungsschritte erhalten (Beispiele 1 und 2).

Aufgabe der vorliegenden Erfindung ist es deshalb, ein Verfahren zur Herstellung pulverförmiger wasserlöslicher Cellulosederivate zu entwickeln, bei dem

- gezielt Mahlungsgrade eingestellt werden können,
- keine Verhornung der Produkte auftritt,
- die Schüttdichte der Produkte erhöht wird,

Diese Aufgabe konnte dadurch gelöst werden, dass

a) ein Cellulosederivat in ausreichenden Menge 50 bis 80 Gew.-%, bevorzugt 65 bis 78 Gew.-% Wasser, bezogen auf das Gesamtgewicht, gequollen oder gelöst wird und anschließend

b) in einer Hochdrehzahl-Gasstrom-Prallmühle durch den Gasstrom eines überhitzten Wasserdampf/Inertgas-Gemisches oder Wasserdampf/Luft-Gemisches mit einem Wasserdampfanteil von 40 bis 99 Gew.-% bezogen auf das Wasserdampf/Inertgas-Gemisch oder Wasserdampf/Luft-Gemisch, das Wasser, aus dem gequollenen oder gelösten Cellulosederivat in die Dampfphase und das gelöste oder gequollene Cellulosederivat in den Festkörperzustand in Form feinteiliger Feststoffpartikel überführt wird,

c) die erhaltenen Feststoffpartikel vom Gasstrom abgetrennt und dann

d) gegebenenfalls getrocknet werden.

Es wurde gefunden, dass die mit diesem Verfahren hergestellten Cellulosederivate-Feststoffpartikel eine hohe Schüttdichte bei guter Rieselfähigkeit besitzen und der Feinstaubanteil im Produkt sehr gering ist. Es findet kein oder nur ein minimaler Viskositätsabbau gegenüber den Ausgangsprodukten statt. Des weiteren konnte gefunden werden, dass der Gesamtenergiebedarf des Verfahrens gegenüber den Verfahren nach dem Stand der Technik verringert bzw. nahezu unverändert ist und, da das Wärmeträgergas aus überhitztem Wasserdampf/Inertgas-Gemisch oder Wasserdampf/Luft-Gemisch besteht, die zur Mahlung eingetragene Energie sich umgewandelt in Wärmeenergie im Wärmeträgergas wiederfindet und somit genutzt oder vorteilhaft in andere Energieformen umgewandelt werden kann. Überraschenderweise konnte gefunden werden, dass keine Filme oder Anbackungen in der Mahlanlage entstehen und somit der Instandhaltungsaufwand gering ist.

Das erfindungsgemäße Verfahren ist ein neues, besonders wirtschaftliches Verfahren zur Herstellung von pulverförmigen wasserlöslichen Cellulosederivaten. Das Verfahren umfasst die Quellung oder Lösung des Cellulosederivates in Wasser und die anschließende Mahltrocknung des gequollenen oder gelösten Cellulosederivates in einer bevorzugt sieblosen Hochdrehzahl-Gasstrom-Prallmühle wobei als Transport und Wärmeträgergas ein Wasserdampf/Inertgas-Gemisch oder Wasserdampf/Luft-Gemisch eingesetzt wird.

Die Cellulosederivate, die in diesem Verfahren zur Anwendung kommen, sind löslich oder zumindest in quellbar Wasser. Sie können einen oder mehrere Substituenten der Art:

Hydroxethyl, Hydroxypropyl, Hydroxybutyl, Methyl, Ethyl, Propyl, Dihydroxypropyl, Carboxymethyl, Sulfoethyl, hydrophobe langkettige verzweigte und nicht verzweigte Alkylreste, hydrophobe langkettige verzweigte und nicht verzweigte Alkylarylreste oder Arylalkylreste, kationische Reste, Acetat, Propionat, Butyrat, Lactat, Nitrat, Sulfat tragen, wobei einige Reste, wie z.B. Hydroxyethyl, Hydroxypropyl, Hydroxybutyl, Dihydroxypropyl, Lactat in der Lage sind, Pfröpfe zu bilden und die Substituenten der erfindungsgemäßen Polysaccharidderivate nicht auf diese Reste beschränkt sind.

Beispiele für Cellulosederivate sind Hydroxyethylcellulose (HEC), Hydroxypropylcellulose (HPC), Ethylhydroxyethylcellulose (EHEC), Carboxymethylhydroxyethylcellulose (CMHEC), Hydroxypropylhydroxyethylcellulose (HPHEC), Methylcellulose (MC), Methylhydroxypropylcellulose (MHPC), Methylhydroxypropylhydroxyethylcellulose (MHPHEC), Methylhydroxyethylcellulose (MHEC), Carboxymethylcellulose (CMC), hydrophob modifizierte Hydroxyethylcellulose (hmHEC), hydrophob modifizierte Hydroxypropylcellulose (hmHPC), hydrophob modifizierte Ethylhydroxyethylcellulose (hmEHEC), hydrophob modifizierte Carboxymethylhydroxyethylcellulose (hmCMHEC), hydrophob modifizierte Hydroxypropylhydroxyethylcellulose (hmHPHEC), hydrophob modifizierte Methylcellulose (hmMC), hydrophob modifizierte Methylhydroxypropylcellulose (hmMHPC), hydrophob modifizierte Methylhydroxyethylcellulose (hmMHEC), hydrophob modifizierte Carboxymethylmethylcellulose (hmCMMC), Sulfoethylcellulose (SEC), Hydroxyethylsulfoethylcellulose (HESEC), Hydroxypropylsulfoethylcellulose (HPSEC), Methylhydroxyethylsulfoethylcellulose (MHESEC), Methylhydroxypropylsulfoethylcellulose (MHPSEC), Hydroxyethylhydroxypropylsulfoethylcellulose (HEHPSEC), Carboxymethylsulfoethylcellulose (CMSEC), hydrophob modifizierte Sulfoethylcellulose (hmSEC), hydrophob modifizierte Hydroxyethylsulfoethylcellulose (hmHESEC), hydrophob modifizierte Hydroxypropylsulfoethylcellulose (hmHPSEC), hydrophob modifizierte Hydroxyethylhydroxypropylsulfoethylcellulose (hmHEHPSEC).

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben. Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben. Die Bestimmung der Seitengruppen erfolgt anhand der Zeisel-Methode (Literatur: G. Bartelmus und R. Ketterer, Z. Anal. Chem. 286 (1977) 161-190).

Besonders bevorzugte Cellulosederivate sind Celluloseether mit einem thermischen Flockpunkt in Wasser wie z.B. Methylcellulose, Methylhydroxyethylcellulose, Methylhydroxypropylcellulose, Methylhydroxypropylhydroxyethylcellulose und Hydroxypropylcellulose. Am meisten bevorzugt sind Methyldydroxyethylcellulosen mit einem DS (M) von 1 bis 2,6 und einem MS (HE) von 0,05 bis 0,9, insbesondere solche mit einem DS (M) von 1,3 bis 1,9 und einem MS (HE) von 0,15 bis 0,55 und Methylhydroxypropylhydroxyethylcellulosen mit einem DS (M) von 1 bis 2,6 und einem MS (HP) von 0,05 bis 1,2 und einem MS (HE) von 0,05 bis 0,9, insbesondere solche mit einem DS (M) von 1,3 bis 1,9 und einem MS (HP) von 0,05 bis 0,6 und einem MS (HE) von 0,15 bis 0,55.

Die Wasserlöslichkeit der Cellulosederivate die einen thermischen Flockpunkt in Wasser aufweisen ist stark temperaturabhängig. Unterhalb des thermischen Flockpunktes bilden diese Cellulosederivate Lösungen bzw. Gele. Der thermische Flockpunkt in Wasser beschreibt die Temperatur, bei der es zur Hitzekoagulation des Cellulosederivates kommt.

Durch den Quell- oder Lösevorgang werden übergeordnete Strukturen, wie sie aus dem Celluloseausgangsmaterial resultieren, aufgehoben. So geht z.B. bei Celluloseethern die faserartige Struktur nahezu vollständig verloren, wobei nur der Anteil des Celluloseethers gequollen oder gelöst wird, dessen Derivatisierung ausreichend ist. Die so erhaltenen gequollenen oder gelösten Cellulosederivate enthalten zu weniger als 25 bis 50 Gew.-% bezogen auf den Feststoffanteil lösliches oder quellbares Material im Ausgangszustand.

Die resultierenden gequollenen oder gelösten Cellulosederivate stellen viskoelastische Systeme dar, deren Eigenschaftsbild je nach Lösungsmittelmenge und Cellulosederivat einer unter Eigengewicht fließfähigen Lösung, einem flexiblem Gel oder einem weichen aber spröden Festkörper entspricht.

Der Anteil an Wasser wird so gewählt, dass eine ausreichende Quellung bzw. Lösung erreicht wird, um die Faserstrukturen des Cellulosederivates, aufzuheben. In einer bevorzugten Vorgehensweise sind dies 50 bis 80 Gew.-%, bevorzugt 65 bis 78 Gew.-%, insbesondere 68 bis 76 Gew.-% Wasser bezogen auf das Gesamtgewicht. Überraschenderweise wurde gefunden, dass zur Erreichung eines gewünschten Schüttgewichtes des gemahlenen Produktes ein minimaler spezifischer Wassergehalt notwendig ist. Dieser Wert variiert unter anderem mit der Art der Substituenten, dem Veretherungsgrad und dem Molekulargewicht des Cellulosederivates. Im allgemeinen erfordert eine höhere Veretherung einen geringeren Wassergehalt. Ebenso erfordert im allgemeinen ein geringeres Molekulargewicht einen geringeren Wassergehalt. Es werden jedoch auch Ausnahmen gefunden. Es ist zu empfehlen, den jeweils für das zu verarbeitende Cellulosederivat optimalen Wassergehalt durch Versuche zu ermitteln.

In einer Ausführung des Verfahrens werden in Schritt a) Celluloseether mit thermischem Flockpunkt in Wasser, bevorzugt Methylcellulose, Methylhydroxyethylcellulose, Methylhydroxypropylcellulose, Methylhydroxypropylhydroxyethylcellulose, Hydroxypropylcellulose, durch Abkühlung bis auf Temperaturen unterhalb des Flockpunktes gequollen oder in Lösung gebracht, so dass übergeordnete Strukturen, z.B. Faserstrukturen, weitgehend verloren gehen. Bevorzugt werden die Celluloseether in Form eines wasserfeuchten Filterkuchens eingesetzt. Besonders bevorzugt werden wasserfeuchte Filterkuchen der Methylhydroxyethylcellulose, Methylhydroxypropylcellulose, Methylhydroxypropylhydroxyethylcellulose oder Methylcellulose mit üblicherweise ca. 40 bis 65 Gew.-% Wasser eingesetzt, welche mit zusätzlichem Wasser versetzt und gekühlt werden. Bevorzugt wird kaltes Wasser eingemischt und anschließend in bekannter Weise homogenisiert. So wird z.B. in einem Zweiwellenkneter kontinuierlich Wasser eingemischt und das Gemisch anschließend durch Scheren und Kneten homogenisiert. Es eignen sich sowohl gleichläufige als auch gegenläufige Maschinen, wobei die gleichläufigen Maschinen aufgrund der axialen Offenheit bevorzugt werden. Die Schneckenkonfiguration muss den geforderten Bedingungen so angepasst werden, dass zum einen eine ausreichende Knetwirkung erzielt wird, zum anderen die Scherbelastung so dosiert wird, dass keine unzulässige Beanspruchung des Materials auftritt, die ggf. zur Reduktion der Molekülketten-Länge führen kann. Durch ein vergleichsweise geringeres Schergefälle zeichnen sich sog. Doppelmuldenknetmaschinen mit zwei horizontal angeordneten Knetschaufeln aus, die tief ineinander greifen und sich - wie bei den Doppelschnecken-Knetern - gegenseitig abstreifen [Fa. IKA, Fa. List]. Durch unterschiedliche Drehzahlen der Wellen wird die benötigte Friktion im Cellulosederivat-Knetgut und damit eine gute Dispergierung und Homogenisierung der Methylcellulose mit Wasser erzeugt.

Zu den zur Homogenisierung geeigneten einwelligen, kontinuierlichen Knetern zählen sogenannte Reflectoren®, das sind Hochleistungs-Mischer in Modulbauweise, die aus einem mehrteiligen, heiz- und kühlbaren Mischzylinder und einem einseitig gelagerten Flügel-Mischwerk bestehen [Fa. Lipp]. Ebenso geeignet sind auch sog. Stiftzylinder-Extruder oder Stiftconvert® -Extruder [Fa. Berstorff], wie sie zur Herstellung von Kautschuk- und Gummimischungen eingesetzt werden. Die ins Gehäuse eingelassenen Stifte dienen als Widerlager, um das Mitdrehen des Knetgutes mit der Welle zu verhindern. Einwellige Schneckenmaschinen ohne Förderbarrieren sind für die vorgenannte Aufgabe nicht geeignet.

Zur genauen Einstellung der Verweilzeit und/oder zur Steuerung paralleler diffusionsbestimmter Reaktionen sind Batch-Aggregate den kontinuierlichen Apparaten vorzuziehen. Knetmischer mit sog. doppelschaufligen Sigma-Rührem [Fa. Fima] in horizontaler Einbaulage eignen sich für die beschriebene Aufgabe in besonderem Maße. Die Schaufeln arbeiten mit unterschiedlichen Geschwindigkeiten und in der Drehrichtung umkehrbar. Zur Entleerung des Kneters ist im Sattelbereich eine Austragsschnecke angeordnet. Auch geeignet ist ein Rührbehälter mit vertikal angeordneter Mischer-Welle, wenn zur Verhinderung des Mitdrehens der Knetmasse mit der Rührwelle geeignete Stromstörer an der Behälterwand angebracht sind und dadurch eine intensive Mischwirkung auf das Knetgut übertragen wird [Fa. Bayer]. Die Rührarme sind so angeordnet, dass sie neben der Durchmischung des gesamten Behälterinhalts auch eine Presswirkung nach unten bewirken, so dass die in den Behälterboden eingelassene Austragsschnecke stets mit Material gefüttert wird. Ebenso geeignet zur batchweisen Homogenisierung von Cellulosederivaten mit Wasser sind doppelwandige Mischbehälter mit Planetenrührwerk und Inline-Homogenisator. Das Planetenrührwerk sorgt für eine intensive Vermischung des Behälterinhalts und garantiert ein nahezu belagfreies Abreinigen der temperierbaren Behälterinnenwand. Ein im Bypass geschaltetes Rotor-/Stator-System sorgt für eine zusätzliche Homogenisierung.

Das gequollene oder gelöste Cellulosederivat wird dann in Schritt b) in einer bevorzugt sieblosen Höchdrehzahl-Gasstrom-Prallmühle derart in den Festkörperzustand überführt, dass einerseits durch ein überhitztes Wasserdampf/Inertgas-Gemisch oder Wasserdampf/Luft-Gemisch mit einem Wasserdampfanteil von 40 bis 99 Gew.-% bezogen auf das Wasserdampf/Inertgas-Gemisch oder Wasserdampf/Luft-Gemisch, das Wasser, das sich im gequollenen oder gelösten Cellulosederivat befindet, in die Dampfphase überführt wird und andererseits das gelöste oder gequollene Cellulosederivat durch Phasenübergang in den Festkörper überführt wird, wobei bei diesen Prozessen die Formveränderung des Cellulosederivates unter Überlagerung von äußeren Kräften (Prall, Scherung) geschieht

Die Zuführung des Cellulosederivates in die Prallmühle kann in Abhängigkeit der Konsistenz des zuzuführenden Materials mittels an sich bekannten Zuführorganen geschehen. Eine Vorzerkleinerung des zuzuführenden Stranges in Einzelstränge, welche gegebenenfalls zusätzlich in Querrichtung zerteilt werden, kann erfolgen, wobei die Einzelstränge bevorzugt Querschnittsflächen von größer 1 mm$^2$ aufweisen sollten. Vorteilhafterweise wird das Aufgabegut hierfür durch ein Passiersieb gedrückt und dabei zu Einzelsträngen geformt. In ähnlicher Weise können ein- oder zweiwellige Schneckenmaschinen mit Lochscheibenvorsatz (Fleischwolf) verwendet werden. Mit Hilfe eines Schneidwerkes können die Endlosstränge gegebenenfalls nach der Lochscheibe in kleinere Abschnitte geschnitten werden. Mit Schneckendosierem ist die Einspeisung der extrudierten Stränge direkt auf die Mahlzone der Mühle möglich.

Die Mahltrocknung wird in einer Hochdrehzahl-Gasstrom-Prallmühle, bevorzugt sieblosen Hochdrehzahl-Gasstrom-Prallmühle durchgeführt, in der das Cellulosederivat einer Prall- und/oder Scherbeanspruchung unterworfen wird. Derartige Mühlen sind bekannt und z.B. in der US-A-4 747 550, der DE-A-3 811 910 oder der EP-A-0 775 526 beschrieben.

Als Wärmeträger- und Transportgas zur Mahltrocknung wird ein Gemisch aus Wasserdampf und einem Inertgas oder Luft eingesetzt, wobei der Wasserdampfanteil bevorzugt dadurch aufgebaut wird, dass das als Lösungsmittel für das Cellulosederivat eingesetzte Wasser verdampft wird. In einer weiteren bevorzugten Variante kann in Schritt b) zusätzlich Wasser oder Wasserdampf in die Mühle eingespeist werden, was beispielsweise beim Anfahrprozess zum Aufbau einer Wasserdampfatmosphäre in der Mahlanlage genutzt werden kann.

Als Inertgas können beliebige Gase oder Gasgemische mit einem Taupunkt < RT eingesetzt werden. Bevorzugt werden Stickstoff, Kohlendioxid, Luft, Verbrennungsgase oder Gemische dieser Gase eingesetzt. Die Temperatur des eingespeisten Inertgases bzw. der Luft kann beliebig gewählt werden, bevorzugt wird die Temperatur im Bereich 0 - 300°C liegen, insbesondere nimmt man Inertgas bzw. Luft im Temperaturbereich 5 - 50°C, bevorzugt von Umgebungstemperatur. Das Gas oder Gasgemisch kann durch Wärmetauscher vorgeheizt werden oder, wie im Fall der Verbrennungsgase, bereits heiß vorliegen. Das Inertgas bzw. die Luft kann an beliebigen Stellen der Mahlanlage zugegeben werden. So kann z.B. die Rückführung von Grobkorn zur Mahlzone pneumatisch geschehen und der Förderstrom so gewählt werden, das die gewünschte Menge Inertgas bzw. Luft eingetragen wird. Die Zugabe von Inertgas oder Luft kann z.B. auf der Saugseite des Ventilators oder gemeinsam mit dem Mahlgut geschehen. Die Zugabe des Inertgases bzw. der Luft kann bevorzugt auch an verschiedenen Stellen der Mahlanlage gleichzeitig geschehen. Die Zugabe von Inertgas oder Luft erfolgt in einem Verhältnis zum eingetragen verdampften Wasser von 1:99 Gew.-Teile bis 60:40 Gew.Teile bevorzugt in einem Verhältnis von 3:97 Gew.-Teile bis 40:60 Gew.-Teile, besonders bevorzugt in einem Verhältnis von 5:95 Gew.-Teile bis 30:70 Gew.-Teile. Das eingetragene Wasser wird hierbei durch das gelöste oder gequollene Cellulosederivat eingetragen und im Mahltrocknungsvorgang verdampft oder direkt in Form von Wasser oder Wasserdampf in die Mühle eingespeist. Die verdampfte Menge Wasser berechnet sich wie folgt:

$$\text{Menge Wasserdampf [kg/h]} = \text{eingespeiste Menge Wasser oder Wasserdampf [kg/h]}$$

$$+ \text{ eingetragene Menge Gel [kg/h]} * \text{Gew.-\%Wasser im Gel} / 100 \text{ Gew.-\%} - \text{Durchsatz}$$

$$\text{MC-Pulver [kg/h]} * \text{Gew.-\% Feuchte} / 100\text{Gew.-\%}$$

Da der letzte Term im allgemeinen sehr klein ist im Vergleich zum ersten und zweiten Term, kann die Menge Wasserdampf näherungsweise berechnet werden als:

$$\text{Menge Wasserdampf [kg/h]} = \text{eingespeiste Menge Wasser oder Wasserdampf [kg/]} +$$

$$\text{eingetragene Menge Gel [kg/h]} * \text{Gew.-\% Wasser im Gel} / 100\text{Gew.-\%}$$

Wird kein zusätzliches Wasser oder Wasserdampf in die Mühle eingespeist, so berechnet sich die Menge Wasserdampf näherungsweise als:

$$\text{Menge Wasserdampf [kg/h]} = \text{eingetragene Menge Gel [kg/h]} * \text{Gew.-\% Wasser im}$$

$$\text{Gel} / 100\text{Gew.-\%}$$

Durch die relativ zur eingeschleusten Wasser und Inertgas- bzw. Luft-Menge hohe Gasumlaufmenge im Kreislauf wird die Durchmischung des Wasserdampfes mit dem Inertgas bzw. der Luft gewährleistet.

Das gelöste oder gequollene Cellulosederivat wird durch vielfache Prall- und/oder Scherbeanspruchung zwischen rotierenden und feststehenden oder gegenläufig rotierenden Mahlwerkzeugen und/oder durch Stoß mehrerer Partikel zerkleinert. Gleichzeitig wird das im Feststoff befindliche Lösungsmittel verdampft. Die dazu erforderliche thermische Energie wird nur zum Teil durch das Wärmeträgergas eingebracht. Die durch Reibung in Wärme umgesetzte elektrische Energie des Mühlenantriebes trägt gleichzeitig zur Trocknung bei.

Die erhaltenen feinteiligen Feststoffpartikel werden vom Gasstrom getrennt, z.B. in einem der Mahltrocknungsvorrichtung nachgeschaltetem Abscheider. Dieses kann ein Massenkraftabscheider wie z.B. ein Zyklon oder auch ein Filterabscheider sein.

Je nach Mühlenbauart kann intern eine Klassierung durch Sichtung erfolgen. Ein gegebenenfalls vorhandener Grießeanteil wird aufgrund der die Schleppkräfte des Transportgases überwiegenden Fliehkraft vom Feingut getrennt. Das Feingut wird als Fertiggut aus der Mahlkammer mit dem Transportgas ausgetragen. Die Grieße werden in einem internen oder externen Grießerücklauf wieder zur Mahlzone zurückgeführt. Die Mahltrocknung wird so betrieben, dass eine weitere Klassierstufe durch Sichtung oder Siebung nicht notwendig ist. Jedoch wird vorteilhaft über eine Schutzsiebung das Grobkorn separiert. Hierbei werden Siebe mit einer Maschenweite von 0,125 mm bis 1 mm eingesetzt. Der separierte Grobkornanteil beträgt <15 Gew.-% bevorzugt <7 Gew.-%, besonders bevorzugt <3 Gew.-% bezogen auf die Gesamtmasse des mahlgetrockneten Cellulosederivates. Dieser abgetrennte Grobanteil kann gegebenenfalls zur Mühle zurückgeführt werden oder dem Aufgabegut untergemischt werden.

Das Wärmeträger- und Transportgas (Mahlgas) wird im Kreis geführt und der überschüssige Anteil als Teilstrom ausgeschleust. Die Gasumlaufmenge [kg/h] im Kreislauf steht zur eingetragenen Wasser [kg/h]und Inertgasmenge bzw. Luftmenge [kg/h] bevorzugt im Verhältnis 5 bis 15, insbesondere im Verhältnis 8 bis 12. Vor die Mahltrocknungsvorrichtung wird ein Wärmetauscher geschaltet, der den durch die Verdampfung des Wassers, dass das Cellulosederivat enthält, und Wärmeverlust abgekühlte Mahlgas wieder aufheizt. Die Temperatur des für die Mahltrocknung eingesetzten Wasserdampf/Inertgas-Gemisch oder Wasserdampf/Luft-Gemisch wird minimal so gewählt, dass in Abhängigkeit des gewählten Produktdurchsatzes und/oder der Menge an Lösungsmittel bzw. Lösungsmittelgemisch im Cellulosederivat an keiner Stelle der Taupunkt unterschritten wird.

Durch Verwendung von Wasserdampf/Inertgas-Gemisch oder Wasserdampf/Luft-Gemisch wird in der Mahltrocknungsvorrichtung eine sauerstoffarme Atmosphäre erreicht.

Der Wasserdampfanteil des ausgeschleusten Teilstroms des Mahlgases kann, gegebenenfalls nach einer Heißgasfiltration, unter Wärmerückgewinnung kondensiert werden.

Die feinteiligen Feststoffpartikel können gegebenenfalls in Schritt d) in an sich bekannten Trocknungsvorrichtungen auf die gewünschte Feuchte getrocknet werden. Die Trocknung erfolgt zweckmäßigerweise mit konvektiven Trocknern, vorzugsweise mit Stromtrocknern, Ringtrocknern oder ähnlichen Aggregaten. Bevorzugt wird die Mahltrocknung so betrieben, dass ein nachträglicher Trocknungsschritt nicht notwendig ist.

Für eine Modifizierung des Eigenschaftsprofils des Endproduktes können gegebenenfalls vor, während oder nach einem oder mehreren der Schritte des erfindungsgemäßen Verfahrens Modifikatoren, Additive und/oder Wirkstoffe zugegeben werden.

Unter Modifikatoren sollen Substanzen verstanden werden, die chemisch Einfluss auf das Polysaccharidderivat nehmen. Typische Modifikatoren sind Oxidationsmittel, z.B. Wasserstoffperoxid, Ozon, Hypohalogenide, Perborate und Percarbonate sowie Vernetzungsmittel, z.B. Dialdehyde wie Glyoxal oder Glutarsäuredialdehyd, polyfunktionelle Epoxide, polyfunktionelle Isocyanate, organische Säuren, Mineralsäuren, organische und anorganische Salze, jedoch nicht auf diese beschränkt.

Unter Additiven sollen Substanzen verstanden werden, die keinen chemischen Einfluss auf das Polysaccharidderivat nehmen. Typische Additive sind Konservierungsstoffe, Dispergiermittel, Entschäumer, Luftporenbildner, Pigmente, nichtionische, anionische und kationische synthetische und natürliche Polymere und deren Derivate, z.B. Stärkeether wie Hydroxyethyl oder Hydroxypropylstärke, organische und anorganische Salze, jedoch nicht auf diese beschränkt.

Unter Wirkstoffen sollen Substanzen verstanden werden, die keinen chemischen Einfluss auf das Cellulosederivat nehmen und das Cellulosederivat als Bindemittel nutzen. Typische Wirkstoffe sind Pflanzenschutzmittel und Pharmawirkstoffe, jedoch nicht auf diese beschränkt.

Die Cellulosederivate dieser Erfindung können in einer Vielzahl von Anwendungen eingesetzt werden. Sie werden z.B. angewandt als wasser- oder lösungsmittellösliche Verdicker oder Bindemittel in Farben, Pharmazeutika, Kosmetika oder Lebensmitteln. Sie können auch verwendet werden als Beschichtungsmittel, z.B. in Pharmazeutika. Eine weitere Verwendung ist die als Schutzkolloid z.B. in der Suspensionspolymerisation.

Bei den Produkten dieses Verfahren handelt es sich um feinteilige Cellulosederivate, wobei die aus den Ausgangsmaterialien stammenden Überstrukturen, z.B. Faserstrukturen weitgehend aufgehoben sind.

Die nach dem erfindungsgemäßen Verfahren hergestellten feinteiligen Cellulosederivate werden gegebenenfalls mittels Laserbeugungsverfahren zur Partikelgrößenbestimmung (z.B. Sympatec HELOS (H1007)&RODOS) offline analysiert. Die Auswertung des Beugungsmusters geschieht hierbei zunächst unter der Annahme kugelförmiger Partikel und konstanter wahrer Dichten über das gesamte Partikelgrößenspektrum. Hierbei werden überraschenderweise signifikante Unterschiede im Vergleich zu Produkten, die gemäß Verfahren nach dem Stand der Technik hergestellt wurden, gefunden. So können nach dem erfindungsgemäßen Verfahren Produkte mit weniger als 5 Gew.-%, bevorzugt weniger als 2 Gew.-% bezogen auf das Gesamtgewicht der Partikel mit einer Partikelgröße kleiner 15 μm hergestellt werden. Es können Produkte mit weniger als 2 Gew.-%, bevorzugt weniger als 1 Gew.-% bezogen auf das Gesamtgewicht der Partikel kleiner 10 μm und weniger als 1 Gew.-%, bevorzugt weniger als 0,5 Gew.-%, am meisten bevorzugt weniger 0,1 Gew.-% bezogen auf das Gesamtgewicht der Partikel kleiner 5 μm hergestellt werden. Alternativ kann die Sieblienie auch so eingestellt werden, dass jeweils bezogen auf das Gesamtgewicht 20 Gew.-% der Partikel mit einer Partikelgröße kleiner 15 μm, weniger als 10 Gew.-% kleiner 10 μm und weniger als 2 Gew.-% kleiner 5 μm hergestellt werden. Hieraus resultiert im Vergleich zu Produkten gemäß dem Stand der Technik ein deutlich verringerter Feinststaubanteil und eine engere Partikelgrößenverteilung.

Durch Variation der Drehzahl des Rotors und somit der Umfangsgeschwindigkeit des Rotors der Hochdrehzahl-Gasstrom-Rotationsprallmühle kann gezielt der Grad der Zerkleinerung und somit die Sieblinie eingestellt werden. Zur Steuerung der Mühle wird daher zweckmäßigerweise ein Teil des Produktstromes hinter dem Produktabscheider (Zyklon, Filterabscheider) ausgeschleust und kontinuierlich mittels eines Verfahrens zur Partikelgrößenbestimmung analysiert. Alternativ kann ein Probenahme- und Meßsystem direkt in eine Förderleitung integriert werden. Bevorzugt werden hierfür Laserbeugungsverfahren eingesetzt.

Durch diese Vorgehensweise lassen sich enge Bereiche bezüglich der gewünschten Sieblinien einhalten. So ist es möglich gezielt Mahlgrade einzustellen, wobei bezüglich des kumulierten Siebdurchganges durch ein 0,063 mm Sieb eine Genauigkeit von +/- 5 Gew.-% erreicht wird. Nachfolgend sind die Sieblinien gelistet, die für die Zielgrößen 40, 50, 60, 70, 80, 90 Gew.-% <0,063 mm erreicht werden.

Die Analysensiebe entsprechen der DIN ISO 3310. Die unten angegebenen lichten Maschenweiten entsprechen dem USA-Standard ASTM E11-61 wie folgt:

|  | ASTM E 11-61 |
|---|---|
| 0,25 mm | 60 mesh |
| 0,125 mm | 120 mesh |
| 0,063 mm | 230 mesh |

| Sieblinie A | 40 % < 0,063 mm |
|---|---|
|  | Gew.-% kumulierter Siebdurchgang |
| < 0,25 mm | 98,5 - 100 |
| < 0,2 mm | 95 - 100 |
| < 0,16 mm | 89 - 98 |
| < 0,125 mm | 79 - 92 |
| < 0,1 mm | 65 - 80 |
| < 0,063 mm | 35 - 45 |

| Sieblinie B | 50 % < 0,063 mm |
|---|---|
|  | Gew.-% kumulierter Siebdurchgang |
| < 0,25 mm | 99 - 100 |
| < 0,2 mm | 98 - 100 |
| < 0,16 mm | 93 - 99 |
| < 0,125 mm | 85 - 94,5 |
| < 0,1 mm | 75-88 |
| < 0,063 mm | 45 - 55 |

| Sieblinie C | 60 % < 0,063 mm |
|---|---|
|  | Gew.-% kumulierter Siebdurchgang |
| < 0,25 mm | 99 - 100 |
| < 0,2 mm | 98,5 - 100 |
| < 0,16 mm | 95,5 - 100 |
| < 0,125 mm | 89 - 96,5 |
| < 0,1 mm | 81 - 91,5 |
| < 0,063 mm | 55 - 65 |

| Sieblinie D | 70 % < 0,063 mm |
|---|---|
|  | Gew.-% kumulierter Siebdurchgang |
| < 0,25 mm | 99,5 - 100 |
| < 0,2 mm | 99,0 - 100 |
| < 0,16 mm | 97,0 - 100 |
| < 0,125 mm | 93 - 98 |
| < 0,1 mm | 86 - 94,5 |
| < 0,063 mm | 65 - 75 |

| Sieblinie E | 80 % < 0,063 mm |
|---|---|
| | Gew.-% kumulierter Siebdurchgang |
| < 0,25 mm | 99,9 - 100 |
| < 0,2 mm | 99,5 - 100 |
| < 0,16 mm | 97,5 - 100 |
| < 0,125 mm | 95,5 - 99,5 |
| < 0,1 mm | 91 - 97 |
| < 0,063 mm | 75 - 85 |

| Sieblinie F | 90 % < 0,063 mm |
|---|---|
| | Gew.-% kumulierter Siebdurchgang |
| < 0,25 mm | 99,9 - 100 |
| < 0,2 mm | 99,5 - 100 |
| < 0,16 mm | 98,5 - 100 |
| < 0,125 mm | 96,5 - 99,9 |
| < 0,1 mm | 94 - 99,5 |
| < 0,063 mm | 85 - 95 |

Breitere Partikelgrößenverteilungen lassen sich durch Abmischen von Pulvern unterschiedlicher Sieblinien erhalten.

Die Schüttgewichte der feinteiligen Cellulosederivate lässt sich bei dem erfindungsgemäßen Verfahren von größer/gleich 0,15 kg/l bis größer/gleich 0,5 kg/l einstellen. Bevorzugt werden Produkte mit einem Schüttgewicht größer/gleich 0,3 kg/l und kleiner/gleich 0,5 kg/l erzeugt.

**Beispiele**

**Gelherstellung**

In einem Rührbehälter mit vertikal angeordneter Mischer-Welle, an der die Mischwerkzeuge so angeordnet sind, dass der gesamte Mischraum erfasst wird, wurde wasserfeuchter Filterkuchen einer Methylhydroxyethylcellulose mit einem Wassergehalt von 55 Gew.-% bezogen auf das Gesamtgewicht (aus Methylhydroxyethylcellulose mit einem DS (Methyl) = 1,51 und einem MS (Hydroxyethyl) = 0,28) kontinuierlich mit Wasser vermengt, so dass ein Methylhydroxyethylcellulosegel mit einem Feststoffgehalt von 25 % bezogen auf das Gesamtgewicht wurde. Um das Mitdrehen des Materials zu verhindern, sind Stromstörer an der Behälterwand angeordnet. Die Rührflügel an der Mischerwelle sind so angeordnet, dass sie neben der Durchmischung auch eine Presswirkung nach unten bewirken, so dass die in den Behälterboden eingelassene Austragsschnecke stetig mit Material gefüttert wird. Das Gel wurde aufgefangen und anschließend zu feinteiligen Methylhydroxyethylcelluloseprodukten weiterverarbeitet (Beispiele MT 1-3).

**Beispiele**: **Mahltrocknung (MT)**

Die Mahlanlage besteht aus einer sieblosen Hochdrehzahl-Gastrom-Rotationsmühle (Typ Ultra Rotor II, Altenburger Maschinen Jäckering GmbH) mit vertikal angeordneter Antriebswelle und sieben Mahlbahnen von 0,5 m Durchmesser mit jeweils 16 Schlagplatten, die gegen eine profilierte Gegenmahlbahn arbeiten. Die Rotorumfangsgeschwindigkeit wird durch die Drehzahl des Rotors bestimmt und berechnet sich entsprechend U=π*n*d mit n=Drehzahl des Rotors und d= 0,5 m. Die Drehzahl des Rotors wird über die Mühlensteuerung geregelt. Der Mühle nachgeschaltet ist ein Zyklon mit 0,6 m Durchmesser, wo der Hauptanteil des feingemahlenen Produktes abgeschieden wird, sowie zwei parallel geschaltete Schlauchfilter mit jeweils 12 m$^2$. Nach dem Zyklon drückt ein Radial-Ventilator das Mahlgas über einen Heißgaserzeuger mit Erdgasbrenner wieder in die Mühle.

Mittels einer Dosierschnecke wird das Aufgabegut (wasserfeuchtes Cellulosederivat) in die Mühle auf Höhe der ersten und zweiten Mahlbahn dosiert. Durch eine der Dosierschnecke vorgeschaltete Lochplatte wird das Aufgabegut in einzelne Stränge von ca. 10 mm Durchmesser zerteilt. Zusätzlich wird an verschiedenen Stellen (Ventilator, Prallmühle, Zyklon) der Anlage eine definierte Menge Stickstoff zudosiert.

Der überschüssige Wasserdampf/Stickstoff-Teil wird ausgeschleust und der Wasserdampfteil in einem Wasserstrahlventilator niedergeschlagen.

**Beispiel MT 1:**

Ein Methylhydroxyethylcellulosegel (aus Methylhydroxyethylcellulose mit einem DS (Methyl) = 1,51 und einem MS (Hydroxyethyl) = 0,28) mit einem Feststoffgehalt von 25 % bezogen auf das Gesamtgewicht wurde nach der oben beschriebenen Fahrweise mit einem Durchsatz von 114 kg pro Stunde gemahlen und getrocknet. Das eintretende Wasserdampf/Stickstoff-Gemisch hatte eine Temperatur von 230 bis 250°C bei Normaldruck. Nach der Mahlkammer betrug die Temperatur des Wasserdampf/Stickstoff-Gemisches 130°C. Die umgewälzte Gasmenge betrug 1800 Betriebskubikmeter (gemessen bei 125°C) pro Stunde. Der Wasserdampfanteil im Wasserdampf/Stickstoff-Gemisch betrug 73 Gew.-%.

Bei einer Drehzahl des Rotors des Prallmühle von 3550 $s^{-1}$ wurde eine feinteilige MHEC mit einem Schüttgewicht von 403 g/l und einer Viskosität gemessen als 2 %ige wässrig Lösung von 87.500 mPa*s bei 20°C und 2,55 l/s (Haake Rotovisko)) erhalten. Das erhaltene Pulver passiert zu 75,6 Gew.-% ein 0,063 mm Sieb. Die Partikelgrößenbestimmung mittels Laserbeugung ergab folgende Werte: 4,7Gew.-% <15,5 µm; 2,1Gew.-% <11 µm und 0,7Gew.-% <5,5 µm. Die Produktfeuchte beträgt <2 Gew.-% bezogen auf das Gesamtgewicht.

**Beispiel MT 2:**

Das gleiche MHEC-Gel wurde nach der oben beschriebenen Fahrweise mit einem Durchsatz von 106 kg pro Stunde gemahlen und getrocknet. Das eintretende Wasserdampf/Stickstoff-Gemisch hatte eine Temperatur von 230 bis 245°C bei Normaldruck. Nach der Mahlkammer betrug die Temperatur des Dampfes 130°C. Die umgewälzte Gasmenge betrug 1800 Betriebskubikmeter (gemessen bei 125°C) pro Stunde. Der Wasserdampfanteil im Wasserdampf/Stickstoff-Gemisch betrug 71 Gew.-%

Bei einer Drehzahl des Rotors des Prallmühle von 3175 $s^{-1}$ wurde eine feinteilige MHEC mit einem Schüttgewicht von 397 g/l und einer Viskosität gemessen als 2 %ige wässrige Lösung von 90.200 mPa*s bei 20°C und 2,55 l/s (Haake Rotovisko) erhalten. Das erhaltene Pulver passiert zu 66,1 Gew.-% ein 0,063 mm Sieb. Die Partikelgrößenbestimmung mittels Laserbeugung ergab folgende Werte: 2,3 Gew.-% <15,5 µm; 0,9 Gew.-% <11 µm und 0,0 Gew.-% <5,5 µm. Die Produktfeuchte beträgt < 2 Gew.-% bezogen auf das Gesamtgewicht.

**Beispiel MT 3:**

Das gleiche MHEC-Gel wurde nach der oben beschriebenen Fahrweise mit einem Durchsatz von 130 kg pro Stunde gemahlen und getrocknet. Das eintretende Wasserdampf/Stickstoff-Gemisch hatte eine Temperatur von 250 bis 270°C bei Normaldruck. Nach der Mahlkammer betrug die Temperatur des Dampfes 130°C. Die umgewälzte Gasmenge betrug 1700 Betriebskubikmeter (gemessen bei 125°C) pro Stunde. Der Wasserdampfanteil im Wasserdampf/Stickstoff-Gemisch betrug 75 Gew.-%.

Bei einer Drehzahl des Rotors des Prallmühle von 2470 $s^{-1}$ wurde eine feinteilige MHEC mit einem Schüttgewicht von 395 g/l und einer Viskosität gemessen als 2 %ige wässrige Lösung von 93.700 mPa*s bei 20°C und 2,55 l/s (Haake Rotovisko) erhalten. Das erhaltene Pulver passiert zu 55,9 Gew.-% ein 0,063 mm Sieb. Die Partikelgrößenbestimmung mittels Laserbeugung ergab folgende Werte: 1,7 Gew.-% <15,5 µm; 0,6 Gew.-% <11 µm und 0,0 Gew.-% <5,5 µm. Die Produktfeuchte beträgt < 2 Gew.-% bezogen auf das Gesamtgewicht. Die Viskosität der Produkte gemessen als 2 %ige wässrige Lösung bei 20°C und 2,55 l/s (Haake Rotovisko) in [mPa*s] wird in den folgenden Tabellen als V2 abgekürzt. In den Siebanalysen werden die kumulierten Siebdurchgänge in Gew.-% angegeben. Die Laserbeugungswerte werden ebenfalls in Gew.-% angegeben.

**Beispiele MT 4-6:**

| Beispiel | 4 | 5 | 6 |
|---|---|---|---|
| DS(M) | 1,53 | 1,53 | 1,53 |
| MS (HE) | 0,28 | 0,28 | 0,28 |
| MS (HP) | 0,29 | 0,29 | 0,29 |

(fortgesetzt)

| Beispiel | 4 | 5 | 6 |
|---|---|---|---|
| Feststoffgehalt Gel, [%] | 25 | 25 | 25 |
| Durchsatz Gel, [kg/h] | 107 | 115 | 112 |
| Drehzahl Rotor, [l/s] | 3550 | 3175 | 2820 |
| T vor Mühle, [°C] | 210-230 | 220-240 | 230-250 |
| T nach Mühle, [°C] | 130 | 130 | 130 |
| umgewälzte Gasmenge 125°C [m$^3$/h] | 1750 | 1700 | 1700 |
| Wasseranteil im Wasserdampf/Stickstoff Gemisch, [Gew.-%] | 71 | 73 | 72 |
| Siebanalyse | | | |
| < 0,25 mm | 99,9 | 99,7 | 98,6 |
| < 0,2 mm | 99,7 | 99,2 | 95,2 |
| < 0,16 mm | 99,3 | 96,8 | 89,6 |
| < 0,125 mm | 96,8 | 91,0 | 79,1 |
| < 0,1 mm | 91,9 | 81,2 | 65,6 |
| < 0,063 mm | 71,8 | 55,1 | 37,9 |
| V2 | 8200 | 8200 | 8000 |
| Produktfeuchte, [Gew.-%] | 1,7 | 1,3 | 2,0 |
| Schüttgewicht, [g/l] | 408 | 393 | 341 |
| Laserbeugungswerte | | | |
| < 15,5 µm | 4,5 | 2,0 | 1,0 |
| < 11 µm | 2,0 | 0,8 | 0,4 |
| < 5,5 µm | 0,6 | 0,1 | 0,0 |

**Beispiele MT 7-8**

| Beispiel | 7 | 8 |
|---|---|---|
| DS (M) | 1,54 | 1,54 |
| MS (HE) | 0,1 | 0,1 |
| MS (HP) | 0,24 | 0,24 |
| Feststoffgehalt Gel, [%] | 22 | 22 |
| Durchsatz Gel, [kg/h] | 142 | 140 |
| Drehzahl Rotor, [l/s] | 3550 | 2470 |
| T vor Mühle, [°C] | 250-270 | 270-290 |
| T nach Mühle, [°C] | 130 | 130 |
| umgewälzte Gasmenge 125°C [m$^3$/h] | 1750 | 1650 |
| Wasseranteil im Wasserdampf/Stickstoff- | 78 | 77 |

(fortgesetzt)

| Beispiel | 7 | 8 |
|---|---|---|
| Gemisch, [Gew.-%] | | |
| Siebanalyse | | |
| < 0,25 mm | 99,9 | 99,6 |
| < 0,2 mm | 99,8 | 99,1 |
| < 0,16 mm | 99,5 | 96,9 |
| < 0,125 mm | 98,0 | 89,8 |
| < 0,1 mm | 94,4 | 79,8 |
| < 0,063 mm | 78,8 | 49,9 |
| V2 | 49800 | 51000 |
| Produktfeuchte, [Gew.-%] | 1,8 | 1,5 |
| Schüttgewicht, [g/l] | 409 | 414 |

**Beispiele MT 9-12**

| Beispiel | 9 | 10 | 11 | 12 |
|---|---|---|---|---|
| DS (M) | 1,56 | 1,56 | 1,56 | 1,56 |
| MS (HE) | 0,27 | 0,27 | 0,27 | 0,27 |
| Feststoffgehalt Gel, [%] | 25 | 25 | 25 | 25 |
| Durchsatz Gel, [kg/h] | 117 | 114 | 113 | 120 |
| Drehzahl Rotor, [l/s] | 3550 | 3175 | 2820 | 2470 |
| T vor Mühle, [°C] | 240-250 | 230-250 | 240-260 | 250-270 |
| T nach Mühle, [°C] | 130 | 130 | 130 | 130 |
| umgewälzte Gasmenge 125°C [m$^3$/h] | 1800 | 1800 | 1750 | 1750 |
| Wasseranteil im Wasserdampf/Stickstoff-Gemisch, [Gew.-%] | 73 | 73 | 73 | 74 |
| Siebanalyse | | | | |
| < 0,25 mm | 100,0 | 99,9 | 99,9 | 99,7 |
| < 0,2 mm | 99,9 | 99,8 | 99,4 | 98,8 |
| < 0,16 mm | 99,8 | 99,1 | 97,4 | 95,2 |
| < 0,125 mm | 99,1 | 95,5 | 92,0 | 88,1 |
| < 0,1 mm | 95,9 | 89,5 | 83,7 | 78,8 |
| < 0,063 mm | 80,9 | 68,2 | 58,7 | 52,0 |
| V2 | 37100 | 39500 | 39600 | 39800 |
| Produktfeuchte, [Gew.-%] | 1,5 | 1,7 | 1,6 | 1,3 |

(fortgesetzt)

| Beispiel | 9 | 10 | 11 | 12 |
|---|---|---|---|---|
| Siebanalyse | | | | |
| Schüttgewicht, [g/l] | 431 | 424 | 414 | 414 |
| Laserbeugungswerte | | | | |
| < 15,5 μm | 3,4 | 2,2 | 1,2 | 1,0 |
| < 11 μm | 1,2 | 0,8 | 0,4 | 0,3 |
| < 5,5 μm | 0,0 | 0,0 | 0,0 | 0,0 |

**Vergleichsbeispiele**

Die gleiche MHEC wie in den Beispielen 10-13 wurde nach der Separation von der Waschlösung zunächst zu einem Grieß verarbeitet und anschließend mittels einer Schwingmühle vermahlen. Es wurden Produkte mit folgenden Produktparametern erhalten:

| Siebanalyse | | |
|---|---|---|
| < 0,25 mm | 100,0 | 100,0 |
| < 0,2 mm | 100,0 | 100,0 |
| < 0,16 mm | 100,0 | 100,0 |
| < 0,125 mm | 92,7 | 93,9 |
| < 0,1 mm | 80,9 | 83,5 |
| < 0,063 mm | 53,0 | 54,9 |
| V2 | 35900 | 34500 |
| Produktfeuchte, [Gew.-%] | 2,3 | 2,3 |
| Schüttgewicht, [g/l] | 382 | 376 |
| Laserbeugungswerte | | |
| < 15,5 μm | 5,4 | 7,8 |
| < 11 μm | 4,1 | 6,0 |
| < 5,5 μm | 2,9 | 3,9 |

**Beispiele MT 13-16**

| Beispiel | 13 | 14 | 15 | 16 |
|---|---|---|---|---|
| DS (M) | 1,45 | 1,45 | 1,45 | 1,45 |
| MS (HE) | 0,21 | 0,21 | 0,21 | 0,21 |
| Feststoffgehalt Gel, [%] | 22,5 | 26 | 26 | 30 |
| Durchsatz Gel, [kg/h] | 53 | 103 | 107 | 110 |
| Drehzahl Rotor, [l/s] | 4420 | 4420 | 3540 | 4420 |
| T vor Mühle, [°C] | 150-160 | 180-200 | 210-230 | 190-200 |

(fortgesetzt)

| Beispiel | 13 | 14 | 15 | 16 |
|---|---|---|---|---|
| T nach Mühle, [°C] | 120 | 120 | 120 | 120 |
| umgewälzte Gasmenge 115°C [m³/h] | 1850 | 1850 | 1800 | 1850 |
| Wasseranteil im Wasserdampf/Stickstoff-Gemisch, [Gew.-%] | 56 | 70 | 71 | 71 |
| | | | | |
| Siebanalyse | | | | |
| < 0,25 mm | 100,0 | 100,0 | 100,0 | 100,0 |
| < 0,2 mm | 99,9 | 99,9 | 100,0 | 100,0 |
| < 0,16 mm | 99,8 | 99,9 | 99,9 | 100,0 |
| < 0,125 mm | 98,9 | 99,8 | 99,6 | 99,8 |
| < 0,1 mm | 96,8 | 98,8 | 98,1 | 98,0 |
| < 0,063 mm | 86,6 | 92,9 | 88,1 | 85,9 |
| | | | | |
| V2 | 13300 | 15000 | 15900 | 16100 |
| | | | | |
| Produktfeuchte, [Gew.-%] | 1,4 | 2,1 | 1,6 | 2,1 |
| | | | | |
| Schüttgewicht, [g/l] | 360 | 324 | 334 | 247 |
| | | | | |
| Laserbeugungswerte | | | | |
| < 15,5 µm | 8,9 | 19,1 | 9,6 | 10,7 |
| < 11 µm | 3,9 | 8,8 | 4,4 | 5,3 |
| < 5,5 µm | 0,6 | 0,5 | 0,9 | 1,0 |

Die Mahltrocknungsanlage wurde zu Testzwecken bei einer Gesamtlaufzeit von 30 Stunden entsprechend der in den Beispielen MT 1-16 beschriebenen Fahrweise12 An- und Abfahrprozessen unterworfen. Hierbei wurden keine Kondensation von Wasserdampf oder Anbackungen in der Mahltrocknungsanlage beobachtet.

Zum Vergleich wurde die Mahltrocknungsanlage mit Wasserdampf ohne Stickstoffanteil betrieben. Hierbei wurde Kondensation von Wasserdampf, Anbackungen von Mahlgut in der Mühle sowie Anbackungen an Zellenradschleusen beobachtet.

**Patentansprüche**

1.  Verfahren zur Herstellung pulverförmiger wasserlöslicher Cellulosederivate, **dadurch gekennzeichnet, dass**

    a) ein Cellulosederivat in 50 bis 80 Gew.-% Wasser, bezogen auf das Gesamtgewicht, gequollen oder gelöst wird und anschließend

    b) in einer Hochdrehzahl-Gasstrom-Prallmühle durch den Gasstrom eines überhitzten Wasserdampf/Inertgas-Gemisches oder Wasserdampf-Luft-Gemisches mit einem Wasserdampfanteil von 40 bis 99 Gew.-%, bezogen auf das Wasserdampf/Inertgas-Gemisch oder Wasserdampf/Luft-Gemisch, das Wasser, aus dem gequollenen oder gelösten Cellulosederivat in die Dampfphase und das gelöste oder gequollene Cellulosederivat in den Festkörperzustand in Form feinteiliger Feststoffpartikel überführt wird,

    c) die Feststoffpartikel des Cellulosederivates vom Gasstrom abgetrennt werden und

    d) gegebenenfalls getrocknet werden.

2.  Verfahren nach Anspruch 1, **dadurch gekennzeichnet, dass** Modifikatoren, Additive und/oder Wirkstoffe dem Cellulosederivat vor, während oder nach einem oder mehreren der Teilschritte a) bis c) des Verfahrens eingemischt oder zugegeben werden.

3.  Verfahren nach einem der Ansprüche 1 bis 2, **dadurch gekennzeichnet, dass** es sich bei dem Cellulosederivat um ein Cellulosederivat mit einem thermischen Flockpunkt handelt.

4.  Verfahren nach einem der Ansprüche 1 bis 3, **dadurch gekennzeichnet, dass** das Cellulosederivat in Form eines wasserfeuchten Filterkuchens in Schritt a) mit kaltem Wasser im Temperaturbereich von 0 bis 60°C gequollen oder gelöst wird.

5.  Verfahren nach einem der Ansprüche 1 bis 4, **dadurch gekennzeichnet, dass** es sich bei dem Cellulosederivat um einen Celluloseether handelt.

6.  Verfahren nach einem der Ansprüche 1 bis 4, **dadurch gekennzeichnet, dass** in Schritt b) eine sieblose Hochdrehzahl-Gasstrom-Prallmühle verwendet wird.

7.  Verfahren nach einem der Ansprüche 1 bis 6, **dadurch gekennzeichnet, dass** die Sieblinie der feinteiligen Feststoffpartikel des Cellulosederivates in Schritt b) durch Variation der Drehzahl der Hochdrehzahl-Gasstrom-Prallmühle eingestellt wird.

**Claims**

1.  Process for the production of pulverulent water-soluble cellulose derivatives, **characterised in that**

    a) a cellulose derivative is swollen or dissolved in 50 to 80 wt. % of water, referred to the total weight, and then

    b) in a high rotational speed gas jet impact mill, the water from the swollen or dissolved cellulose derivative is converted into the vapour phase by the gas jet of a superheated steam/inert gas mixture or steam/air mixture with a steam content of 40 to 99 wt. % referred to the steam/inert gas mixture or steam/air mixture, and the dissolved or swollen cellulose derivative itself is converted into the solid state in the form of finely particulate solids particles,

    c) the solids particles of the cellulose derivative are separated from the gas stream, and

    d) are optionally dried.

2.  Process according to claim 1, **characterised in that** modifiers, additives and/ or active substances are mixed with or added to the cellulose derivative before, during or after one or more of the partial steps a) to c) of the process.

3.  Process according to one of claims 1 to 2, **characterised in that** the cellulose derivative is a cellulose derivative with a thermal flocculation point.

4.  Process according to one of claims 1 to 3, **characterised in that** the cellulose derivative in the form of a water-moist filter cake is swollen or dissolved in step a) with cold water in the temperature range from 0° to 60°C.

5.  Process according to one of claims 1 to 4, **characterised in that** the cellulose derivative is a cellulose ether.

6.  Process according to one of claims 1 to 4, **characterised in that** a sieve-free high rotational speed gas jet impact mill is used in step b).

7.  Process according to one of claims 1 to 6, **characterised in that** the particle-size distribution curve of the finely particulate solids particles of the cellulose derivative is adjusted in step b) by varying the rotational speed of the high rotational speed gas jet impact mill.

**Revendications**

1.  Procédé pour la préparation de dérivés cellulosiques solubles dans l'eau à l'état de poudre, **caractérisé en ce que**

    a) on gonfle ou on dissout un dérivé cellulosique dans 50 à 80 % en poids d'eau, sur le poids total, puis

b) dans un broyeur à chocs et à courant gazeux tournant à grande vitesse, sous l'action du courant gazeux d'un mélange vapeur d'eau surchauffée/gaz inerte ou vapeur d'eau/air à une teneur en vapeur d'eau de 40 à 99 % du poids du mélange vapeur d'eau/gaz inerte ou du mélange vapeur d'eau/air, on fait passer l'eau du dérivé cellulosique gonflé ou dissous en phase vapeur et on fait passer le dérivé cellulosique dissous ou gonflé à l'état solide sous forme de fines particules solides,

c) on sépare les particules solides du dérivé cellulosique du courant gazeux, et

d) le cas échéant, on les sèche.

2. Procédé selon la revendication 1, **caractérisé en ce que** l'on mélange ou l'on ajoute des agents modifiants, des additifs et/ou des substances actives au dérivé cellulosique avant, durant ou après une ou plusieurs des opérations a) à c) du procédé.

3. Procédé selon l'une des revendications 1 à 2, **caractérisé en ce que** le dérivé cellulosique a un point de floculation à la chaleur.

4. Procédé selon l'une des revendications 1 à 3, **caractérisé en ce que** le dérivé cellulosique à l'état de gâteau de filtration humide d'eau est gonflé ou dissous au stade opératoire a) par de l'eau froide, dans l'intervalle de température de 0 à 60°C.

5. Procédé selon l'une des revendications 1 à 4, **caractérisé en ce que** le dérivé cellulosique est un éther cellulosique.

6. Procédé selon l'une des revendications 1 à 4, **caractérisé en ce que**, au stade opératoire b), on utilise un broyeur à chocs et à courant gazeux tournant à grande vitesse mais sans tamis.

7. Procédé selon l'une des revendications 1 à 6, **caractérisé en ce que** l'on règle la ligne de tamisage des fines particules solides du dérivé cellulosique au stade opératoire b) par variation de la vitesse de rotation du broyeur à chocs et à courant gazeux tournant à grande vitesse.